# EUROPÄISCHE PATENTSCHRIFT

(11) **EP 3 204 260 B1**
(45) Veröffentlichungstag und Bekanntmachung des Hinweises auf die Patenterteilung: **15.04.2020**
(21) Anmeldenummer: 15771023.7
(22) Anmeldetag: 25.09.2015
(51) Int. Cl.: B60Q 1/44, B60Q 1/26, B60Q 11/00

(54) **VERFAHREN ZUM BETRIEB EINES KRAFTFAHRZEUGS MIT EINEM OPTISCHEN SENSOR UND KRAFTFAHRZEUG**
METHOD FOR OPERATING A MOTOR VEHICLE WITH AN OPTICAL SENSOR AND MOTOR VEHICLE
PROCÉDÉ DE COMMANDE D'UN VÉHICULE À MOTEUR DOTÉ D'UN CAPTEUR OPTIQUE ET VÉHICULE À MOTEUR

(30) Priorität: 07.10.2014 DE 102014014938
(43) Veröffentlichungstag der Anmeldung: 16.08.2017
(73) Patentinhaber: Audi AG, 85045 Ingolstadt (DE)
(72) Erfinder: ALTINGER, Harald, 85049 Gerolfing (DE)
(74) Vertreter: Thielmann, Frank
(86) Internationale Anmeldenummer: PCT/EP2015/001906
(87) Internationale Veröffentlichungsnummer: WO 2016/055143

(56) Entgegenhaltungen:
- DE-A1-102008 008 868
- DE-A1-102011 085 002
- DE-A1-102012 205 891
- DE-A1-102012 213 291
- FR-A1- 2 898 310
- FR-A1- 2 955 410
- JP-A- H07 200 987
- JP-A- 2002 347 511
- JP-A- 2009 255 614
- JP-A- 2010 137 757
- US-A1- 2012 044 066

## Beschreibung

Die Erfindung betrifft ein Verfahren zum Betrieb eines Kraftfahrzeugs gemäß dem Oberbegriff des Anspruchs 1. Daneben betrifft die Erfindung ein Kraftfahrzeug.

Bremsleuchten sind bei modernen Kraftfahrzeugen bereits seit langer Zeit bekannt. Sie sind am Heck eines Kraftfahrzeugs vorgesehen und sollen einem nachfolgenden Kraftfahrzeug das Vorliegen eines Bremsvorgangs anzeigen, so dass der Fahrer dieses nachfolgenden Kraftfahrzeugs darauf reagieren kann und beispielsweise selbst einen Bremsvorgang oder zumindest einen Verlangsamungsvorgang seines Kraftfahrzeugs einleiten kann. Dabei sind Bremsleuchten meist so ausgestaltet, dass sie deutlich heller als rückwärtige Positionslichter (Rückleuchten) des Kraftfahrzeugs, falls diese aktiv sind, leuchten. Der Betrieb der Bremsleuchten kann dabei durch verschiedene Signale ausgelöst werden, die das Vorliegen eines Bremsvorgangs anzeigen, beispielsweise durch die Betätigung eines Bremspedals oder aber, falls ein längsführendes Fahrzeugsystem zur zumindest teilweise autonomen Führung des Kraftfahrzeugs verwendet wird, welches Bremseingriffe durchführen darf, beispielsweise auch mit Ansteuerung eines Bremssystems im Rahmen eines Bremseingriffs.

Dabei kann es vorkommen, dass, insbesondere bei bestimmten Lichtverhältnissen und/oder bestimmten Ausgestaltungen von Bremsleuchten, die Bremsleuchten eine ungewollte Blendwirkung auf den Fahrer eines nachfolgenden Kraftfahrzeugs ausüben. Dies gilt insbesondere für die in modernen Kraftfahrzeugen immer häufiger vorgesehenen, mit LEDs als Lichtquelle arbeitenden Bremsleuchten. Zur Lösung dieser Problematik wurde beispielsweise durch die DE 199 53 447 A1 vorgeschlagen, eine Abstandssensorik zu verwenden, um den Abstand zum unmittelbar nachfolgenden Verkehr zu vermessen, wobei dann, wenn ein hinter dem eigenen Kraftfahrzeug befindliches weiteres Kraftfahrzeug ebenso steht, für die Dauer des Ruhezustands die Bremsleuchten abschaltbar sind oder deren Leuchtstärke auf ein blendfreies Maß reduzierbar ist. Dies bezieht sich jedoch lediglich auf den Stillstand von Kraftfahrzeugen und beachtet nicht die sonstigen Ausleuchtverhältnisse oder die Kenntnisnahme des Fahrers des nachfolgenden Kraftfahrzeugs.

Ein weiteres Problem, das bei Bremsleuchten häufig auftritt, ist, dass deren Ausfall bzw. Beschädigung durch den Fahrer des jeweiligen Kraftfahrzeugs aufgrund ihrer Ausrichtung in Bereiche hinter das Kraftfahrzeug häufig nicht bemerkt wird. Dies kann dazu führen, dass längere Zeit mit einer nicht vollständig betriebsbereiten Bremsleuchte gefahren wird.

Die DE 10 2011 085 002 A1 offenbart ein Verfahren zur Vermeidung eines Auffahrunfalls eines voranfahrenden Fahrzeugs mit einem nachfolgenden Fahrzeug, wobei ein Fahrerassistenzsystem des voranfahrenden Fahrzeugs ein Signal über zumindest einen heckseitigen optischen Signalgeber abgibt.

Aus der DE 10 2012 213 291 A1 ist eine Vorrichtung zum Ermitteln von Situationsdaten basierend auf Bilddaten bekannt, welche ein pulsweitenmoduliertes Ausgangssignal einer Lichtquelle eines vorausfahrenden Kraftfahrzeugs ermittelt.

Die JP 2009 255 614 A beschreibt eine Steuereinrichtung eines Kraftfahrzeugs zur Steuerung einer Bremseinrichtung und einer Lampe, umfassend ein Mittel zum Erfassen eines Aufleuchtens einer Lampe, die von außerhalb eines voranfahrenden Fahrzeugs erkennbar ist, und ein Bremsensteuerungsmittel zum Ansteuern der Bremseinrichtung, wenn ein Aufleuchten der Lampe des voranfahrenden Fahrzeugs erfasst wird.

Der Erfindung liegt daher die Aufgabe zugrunde, eine bessere Analyse und insbesondere auch Ansteuerung von Bremsleuchten im Hinblick auf nachfolgende Kraftfahrzeuge zu erlauben.

Zur Lösung dieser Aufgabe ist erfindungsgemäß ein Verfahren zum Betreiben eines Kraftfahrzeugs gemäß Anspruch 1 vorgesehen.

Erfindungsgemäß wird mithin vorgeschlagen, nachdem viele Kraftfahrzeuge heutzutage mit optischen, auf das Vorfeld des Kraftfahrzeugs gerichteten Sensoren, insbesondere Kameras, ausgestattet sind, eine Analyse des Verhaltens der Bremsleuchte im nachfolgenden Kraftfahrzeug vorzunehmen, um dann bei Bedarf über eine Kraftfahrzeug-zu-Kraftfahrzeug-Kommunikation notwendige Kommunikationsinformationen bezüglich der Bremsleuchten zu übermitteln, wobei eine derartige Analyse gegebenenfalls auch durch eine zuvor erhaltene Kommunikationsinformation des unmittelbar vorausfahrenden Kraftfahrzeugs erst ausgelöst werden kann. Auf diese Weise wird mithin bezüglich des bremsenden Kraftfahrzeugs eine zu diesem Kraftfahrzeug externe, dem nachfolgenden Kraftfahrzeug zugeordnete optische Sensorik eingesetzt, die ideal platziert ist, um die benötigten Informationen über die Bremsleuchten für die aktuelle Situation zu liefern und gegebenenfalls geeignete Maßnahmen anzustoßen. Dabei werden grundsätzlich übliche Verfahren der Bildverarbeitung eingesetzt, die es erlauben, Bremsleuchten anhand ihrer Position relativ zu sonstigen Merkmalen des vorausfahrenden Kraftfahrzeugs, die in den Sensordaten des optischen Sensors enthalten sind, bzw. anhand ihres zeitlichen Verhaltens zu identifizieren und mithin zu detektieren. Dabei kann beispielsweise wenigstens ein Template bzw. Modell verwendet werden, das Bereiche angibt, in denen nach Bremsleuchten gesucht werden kann und dergleichen. Nützlich ist dabei die Verarbeitung einer Bremsinformation, die anzeigt, dass das vorausfahrende Kraftfahrzeug tatsächlich bremst, da dann davon ausgegangen werden kann, dass die Bremsleuchten aktiv sein sollten und in üblicherweise roter Farbe leuchten, was es erlaubt, gezielt nach ihnen zu suchen. Eine derartige Bremsinformation kann beispielsweise aus einer mit der Kraftfahrzeug-zu-Kraftfahrzeug-Kommunikationseinrichtung empfangenden Information, Sensordaten des eigenen Kraftfahrzeugs und/oder sonstigen Quellen abgeleitet werden.

Erfindungsgemäß ist ferner vorgesehen, dass bei einer einen Blendungsschwellwert überschreitenden Helligkeit und Vorliegen einer einen Verlangsamungsvorgang des eigenen Kraftfahrzeugs anzeigenden Verlangsamungsinformation eine die Abdunklung und/oder Deaktivierung der Bremsleuchten des unmittelbar vorausfahrenden Kraftfahrzeugs anfordernde Kommunikationsinformation an das unmittelbar vorausfahrende Kraftfahrzeug gesendet wird. Die Tatsache, dass im eigenen Kraftfahrzeug selbst ein Verlangsamungsvorgang eingeleitet wurde, insbesondere ein Bremsvorgang, quittiert letztlich den Empfang des durch die Aktivität der Bremsleuchten ausgesandten Signals. Mit anderen Worten ist dem Fahrer oder dem das Kraftfahrzeug längsführend betreibenden Fahrzeugsystem, beispielsweise einem Längsführungssystem, bekannt, dass das vorausfahrende Kraftfahrzeug bremst, indem mit einer eigenen Verlangsamungsstrategie reagiert wird. Dann wiederum ist es jedoch nicht länger nötig, die Bremsleuchten beim vorausfahrenden Kraftfahrzeug in voller Helligkeit (oder überhaupt) zu betreiben. Mithin kann eine Kommunikationsinformation an das unmittelbar vorausfahrende Kraftfahrzeug gesendet werden, die zu einer Dimmung oder gar gänzlichen Deaktivierung der Bremsleuchten führen kann, da letzteres insbesondere dann zweckmäßig ist, wenn beide Kraftfahrzeuge demnächst zum Stillstand kommen oder durch die jeweiligen Verlangsamungsvorgänge bereits zum Stillstand gekommen sind. Dabei ist insbesondere für die Längsführung wenigstens teilweise autonom steuernde Fahrzeugsysteme zu beachten, dass diese meist auch über Umgebungssensoren des Kraftfahrzeugs, die auch den optischen Sensor umfassen können, ohnehin bestimmen, ob ein unmittelbar vorausfahrendes Kraftfahrzeug gerade bremst oder beschleunigt. Gerade in solchen Fällen ist es dann, wenn der Bremsvorgang des unmittelbar vorausfahrenden Kraftfahrzeugs in dem Fahrzeugsystem erkannt wurde, vollkommen unnötig, den Fahrer des nachfolgenden Kraftfahrzeugs weiter zu blenden. Mithin erlaubt, insgesamt gesagt, das erfindungsgemäße Verfahren in dieser Ausgestaltung eine Reduzierung von Blendeffekten beim nachfolgenden Kraftfahrzeug, wenn derartige drohen, was durch den Blendungsschwellwert beschrieben wird, nachdem eine Helligkeit der Bremsleuchten, wie erläutert, leicht aus den Sensordaten des optischen Sensors abgeleitet werden kann.

Dabei kann bei einem bezüglich der Längsführung automatisierten Betriebs des eigenen Kraftfahrzeugs die Verlangsamungsinformation von einem den automatisierten Betrieb steuernden Fahrzeugsystem bereitgestellt werden und/oder bei einer manuellen Längsführung die Verlangsamungsinformation durch Auswertung von von einer Eigensensorik des Kraftfahrzeugs gelieferten Sensordaten und/oder abhängig von einer Aktivierung der Bremsleuchten des eigenen Kraftfahrzeugs ermittelt werden. Dabei ist darauf hinzuweisen, dass eine derartige Verlangsamungsinformation im Fall von den automatisierten Betrieb steuernden Fahrzeugsystemen auch dann bereits gegeben werden kann, wenn die Verlangsamung des unmittelbar vorausfahrenden Kraftfahrzeugs bereits für die Berechnungen berücksichtigt wurde, auch wenn unmittelbar noch keine Verlangsamung des eigenen Kraftfahrzeugs erforderlich ist, so dass die Verlangsamungsinformation dann als Quittierungsinformation dafür, dass der Bremsvorgang des vorausfahrenden Kraftfahrzeugs zur Kenntnis genommen wurde, verstanden werden kann. In Fällen, in denen der Fahrer die Längsführung manuell betreibt, ist es zudem zweckmäßiger, die Helligkeit der Bremsleuchten nur zu reduzieren, da der Fahrer explizit die Information benötigen könnte, wann der Bremsvorgang des unmittelbar vorausfahrenden Kraftfahrzeugs beendet ist, um entsprechend weiter zu reagieren. In diesem Fall wird eine Blendung verhindert und die Informationswirkung aufrecht erhalten, indem lediglich eine eine Dimmung anfordernde Kommunikationsinformation an das unmittelbar vorausfahrende Kraftfahrzeug gesendet wird.

Hinsichtlich der Feststellung eines Verlangsamungsvorgangs in Reaktion auf einen Bremsvorgang des unmittelbar vorausfahrenden Kraftfahrzeugs, insbesondere einen eigenen Bremsvorgang, können verschiedene Eigensensoren des Kraftfahrzeugs eingesetzt werden, wobei bevorzugt die Verlangsamungsinformation bei einer manuellen Längsführung durch eine Bremspedalbetätigung anzeigende Eigensensoren ermittelt werden kann. Zweckmäßig kann es in diesem Zusammenhang auch sein, einen zeitlichen Zusammenhang des Verlangsamungsvorgangs, insbesondere Bremsvorgangs, des eigenen Kraftfahrzeugs zu dem Beginn des Bremsvorgangs des unmittelbar vorausfahrenden Kraftfahrzeugs zu überprüfen, bevor die Verlangsamungsinformation gegeben wird. Ein eigener Bremsvorgang kann zweckmäßig auch bei Vorliegen eines Signals zur Aktivierung der eigenen Bremsleuchten detektiert werden.

Eine weitere besonders bevorzugte Ausgestaltung der vorliegenden Erfindung sieht vor, dass bei einer von dem unmittelbar vorausfahrenden Kraftfahrzeug ausgehend empfangenen, einen aktuellen Bremsvorgang des unmittelbar vorausfahrenden Kraftfahrzeugs anzeigenden Kommunikationsinformation und/oder einem durch Auswertung von Umgebungsdaten des eigenen Kraftfahrzeugs festgestellten Bremsvorgang des unmittelbar vorausfahrenden Kraftfahrzeugs und/oder bei Detektion einer aktivierten Bremsleuchte nur auf einer Seite des unmittelbar vorausfahrenden Kraftfahrzeugs dann, wenn wenigstens eine Bremsleuchte des unmittelbar vorausfahrenden Kraftfahrzeugs nicht oder als nicht leuchtend detektiert wurde, eine diesem entsprechende, auf defekte Bremsleuchten hinweisende Kommunikationsinformation an das unmittelbar vorausfahrende Kraftfahrzeug gesendet wird. Dabei ist es besonders zweckmäßig, wenn der Bremsvorgang des unmittelbar vorausfahrenden Kraftfahrzeugs durch eine von diesem ausgesandte Kommunikationsinformation angezeigt wird, da die Kommunikationsinformation dann auch Hinweise darauf enthalten kann, welche Bremsleuchten diesen Bremsvorgang anzeigen sollten, so dass noch gezielter im Rahmen der Bildauswertung versucht werden kann, diese Bremsleuchten zu detektieren und mithin auf ihre Funktionsfähigkeit zu überprüfen. Kann das eigene Kraftfahrzeug keine oder zu wenige auf einen Bremsvorgang und mithin eine aktive Bremsleuchte hinweisende Helligkeitsmuster erkennen, spricht dies für einen Defekt wenigstens einer Bremsleuchte, so dass das vorausfahrende Kraftfahrzeug hierüber durch eine weitere Kommunikationsinformation informiert werden kann.

Wie bereits beschrieben wurde, sind zur Ermittlung der Helligkeit und/oder Detektierbarkeit der Bremsleuchten verschiedene, grundsätzlich bekannte Bildverarbeitungsverfahren einsetzbar. Beispielsweise kann vorgesehen sein, dass die Helligkeit und/oder Detektierbarkeit unter Berücksichtigung einer Farbinformation für empfangenes Licht und/oder unter Annahme eines Modells (Template) für das unmittelbar vorausfahrende Kraftfahrzeug und/oder unter Berücksichtigung von Nachverfolgungsdaten über das unmittelbar vorausfahrende Kraftfahrzeug ermittelt wird. Es ist bekannt, dass Bremsleuchten üblicherweise ihr Signallicht in rot abgeben, so dass dies bereits die Suche nach aktiven Bremsleuchten vereinfacht, wobei zusätzlich Nachverfolgungsdaten verwendet werden können, so dass, insbesondere in Zusammenhang mit einem bekannten Bremsvorgang des unmittelbar vorausfahrenden Kraftfahrzeugs, bei einem plötzlichen Aufleuchten neuer Lichtquellen am unmittelbar vorausfahrenden Kraftfahrzeug darauf geschlossen werden kann, dass es sich um die Bremsleuchten handelt. Templates, die Bereiche angeben, wo welches Merkmal an einem unmittelbar vorausfahrenden Kraftfahrzeug aufgefunden werden kann, sind ebenso bereits im Stand der Technik grundsätzlich bekannt und können vorteilhaft eingesetzt werden, um die Bremsleuchten schneller zu lokalisieren. Es sind jedoch auch weitere und/oder andere Möglichkeiten der Bildverarbeitung im Rahmen der vorliegenden Erfindung denkbar.

Als optischer Sensor wird erfindungsgemäß eine Kamera verwendet, wie sie beispielsweise bei modernen Kraftfahrzeugen oft hinter der Windschutzscheibe ohnehin vorhanden ist, um das Vorfeld des Kraftfahrzeugs zu überwachen. Ferner kann zweckmäßigerweise ein WLAN-Standard zur Kommunikation verwendet werden. Zur Kraftfahrzeug-zu-Kraftfahrzeug-Kommunikation wurde bereits ein bestimmter WLAN-Standard vorgeschlagen, nämlich 802.11p, der beispielsweise um die Information ergänzt werden kann, dass ein Kraftfahrzeug gerade bremst und dem auch sonstige Kommunikationsinformationen im Rahmen der vorliegenden Erfindung hinzugefügt werden können.

Selbstverständlich kann das eigene Kraftfahrzeug auch ausgebildet sein, über Kraftfahrzeug-zu-Kraftfahrzeug-Kommunikation erhaltene Kommunikationsinformationen von unmittelbar nachfolgenden Kraftfahrzeugen, die sich auf die eigenen Bremsleuchten beziehen, entsprechend auszuwerten. So kann vorgesehen sein, dass bei Empfang einer die Abdunklung und/oder Deaktivierung der Bremsleuchten des eigenen Kraftfahrzeugs anfordernden Kommunikationsinformation von einem unmittelbar nachfolgenden Kraftfahrzeug eine Abdunklung und/oder Deaktivierung der Bremsleuchten für den aktuellen Bremsvorgang erfolgt. Entsprechend kann vorgesehen sein, dass bei Empfang einer auf defekte Bremsleuchten hinweisenden Kommunikationsinformation eine Hinweisinformation an den Fahrer ausgegeben wird und/oder ein Fehlerspeichereintrag abgelegt wird. Eine Hinweisinformation kann dabei beispielsweise an einem Display an der Instrumententafel oder dergleichen angezeigt werden, beispielsweise als "Vermutlich defekte Bremsleuchte! Bitte überprüfen und gegebenenfalls Werkstatt aufsuchen!" oder dergleichen. Fehlerspeichereinträge ermöglichen es der entsprechenden Werkstatt, besser nachzuvollziehen, wann eine Bremsleuchte defekt wurde und/oder ob der Defekt durch mehrere Kraftfahrzeuge gemeldet wurde.

Neben dem Verfahren betrifft die Erfindung auch ein Kraftfahrzeug, das neben einem optischen Sensor und Bremsleuchten auch ein zur Durchführung des erfindungsgemäßen Verfahrens ausgebildetes Steuergerät aufweist. Dabei kann das Steuergerät dediziert zur Durchführung des erfindungsgemäßen Verfahrens realisiert werden, bevorzugt ist es jedoch, die zusätzliche Funktionalität der vorliegenden Erfindung in ein ohnehin vorgesehenes Steuergerät zu integrieren, beispielsweise ein die Sensordaten des optischen Sensors auswertendes Steuergerät. Sämtliche Ausführungen bezüglich des erfindungsgemäßen Verfahrens lassen sich analog auf das erfindungsgemäße Kraftfahrzeug übertragen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: ein erstes von einer Kamera aufgenommenes Bild eines vo-rausfahrenden Kraftfahrzeugs,
- Fig. 3: ein zweites, von einer Kamera aufgenommenes Bild eines vo-rausfahrenden Kraftfahrzeugs, und
- Fig. 4: einen Ablaufplan des erfindungsgemäßen Verfahrens.

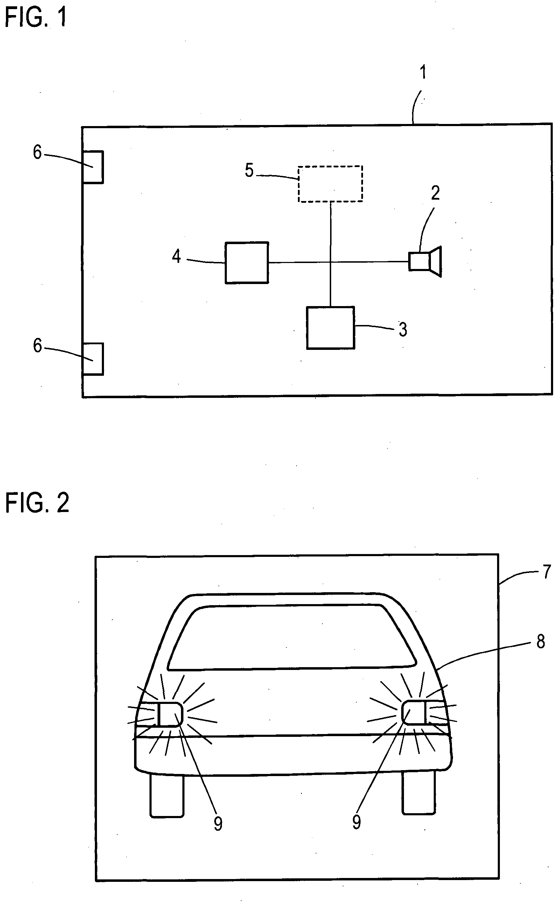

Fig. 1 zeigt eine Prinzipskizze eines erfindungsgemäßen Kraftfahrzeugs 1. Dieses weist als optischen, auf das Vorfeld des Kraftfahrzeugs 1 gerichteten Sensor vorliegend eine Kamera 2 auf, die hinter der Windschutzscheibe des Kraftfahrzeugs 1 angeordnet sein kann und mithin in der Lage ist, als Sensordaten Bilddaten eines unmittelbar vorausfahrenden Kraftfahrzeugs zu erzeugen. Diese Bilddaten werden durch ein Steuergerät 3 ausgewertet, welches auch zur Durchführung des erfindungsgemäßen Verfahrens ausgebildet ist. Dabei können die Bilddaten beispielsweise über ein Bussystem an das Steuergerät 3 übertragen werden. Über dieses Bussystem kommuniziert die Steuereinrichtung 3 auch mit einer Kraftfahrzeug-zu-Kraftfahrzeug-Kommunikationseinrichtung 4 sowie weiteren Fahrzeugsystemen 5, die hier nur angedeutet sind. Unter den weiteren Fahrzeugsystemen 5 kann beispielsweise ein zur wenigstens teilweise automatischen Längsführung des Kraftfahrzeugs ausgebildetes Fahrzeugsystem sein, beispielsweise ein ACC-System (ACC = Adaptive Cruise Control).

Schließlich weist das Kraftfahrzeug 1 auch Bremsleuchten 6 in seinem Heckbereich auf, die immer dann, wenn ein Bremsvorgang vorgenommen wird, sei es automatisch durch ein Fahrzeugsystem oder durch den Fahrer, aufleuchten.

Im Steuergerät 3, welches vorliegend auch zur sonstigen Bildverarbeitung der Bilddaten der Kamera 2 ausgebildet ist, erfolgt auch eine Analyse der Helligkeit und grundsätzlichen Detektierbarkeit von Bremsleuchten des unmittelbar vorausfahrenden Kraftfahrzeuges, da hieraus Informationen abgeleitet werden können, die gegebenenfalls zu einer notwendigen Kraftfahrzeug-zu-Kraftfahrzeug-Kommunikation mittels der Kommunikationseinrichtung 4 zu dem unmittelbar vorausfahrenden Kraftfahrzeug führen können. Ein beispielhaftes Kamerabild 7 ist in Fig. 2 dargestellt. Deutlich zu erkennen ist das unmittelbar vorausfahrende Kraftfahrzeug 8, dessen Bremsleuchten 9 vorliegend beide leuchten. Die Bremsleuchten 9 selbst können aufgrund der Tatsache, dass sie rot und hell leuchten, eine Bremsinformation über einen Bremsvorgang des unmittelbar vorausfahrenden Kraftfahrzeugs vorliegt und ein Modell des unmittelbar vorausfahrenden Kraftfahrzeugs 8 verwendet wird, welches angibt, wo die Bremsleuchten 9 vorliegen sollten, leicht detektiert werden und ihre Helligkeit kann leicht bestimmt werden. Die Position von Bremsleuchten 9 am unmittelbar vorausfahrenden Kraftfahrzeug kann auch Mitinhalt einer Kommunikationsinformation sein, die von dem unmittelbar vorausfahrenden Kraftfahrzeug empfangen wurde und die anzeigt, dass gerade ein Bremsvorgang vorliegt. Dann enthält die Kommunikationsinformation mithin auch Daten über die aufgrund des Bremsvorgangs leuchtenden Bremsleuchten 9.

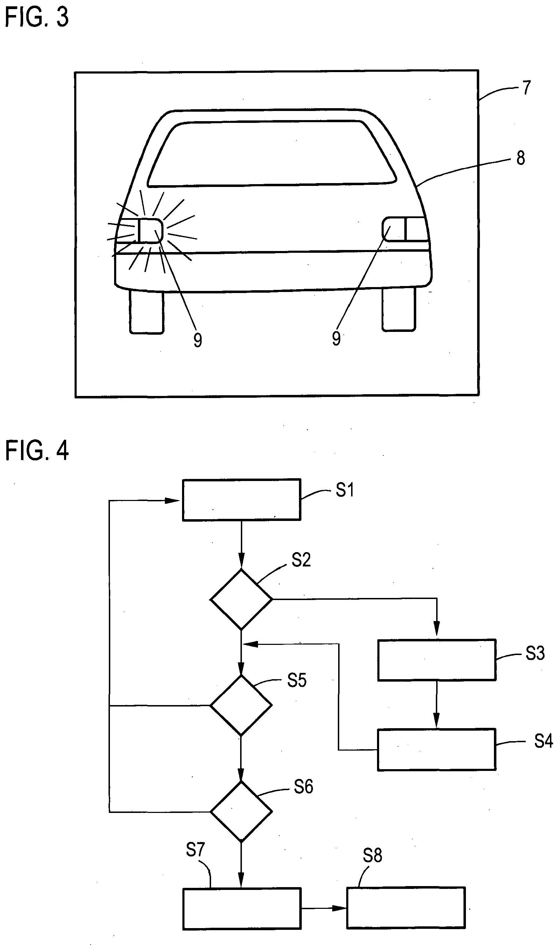

Fig. 3 zeigt ein weiteres Kamerabild 7, in dem nur die linke der Bremsleuchten 9 leuchtet, für die rechte der Bremsleuchten 9 jedoch keine Aktivität festgestellt werden kann oder sie aufgrund dieser Tatsache überhaupt nicht detektierbar ist.

Die mithin aus den Kamerabildern 7 als Bilddaten der Kamera 2 erhaltenen Informationen können auf verschiedene Art und Weise genutzt werden, wie durch das Ausführungsbeispiel des erfindungsgemäßen Verfahrens, welches anhand der Fig. 4 erläutert werden soll, genauer dargestellt wird.

Dort wird in einem Schritt S1 festgestellt, dass durch das unmittelbar vorausfahrende Kraftfahrzeug 8 ein Bremsvorgang durchgeführt wird. Dies kann aufgrund einer von dem unmittelbar vorausfahrenden Kraftfahrzeug 8 gelieferten Kommunikationsinformation erfolgen, es ist jedoch auch denkbar, bevorzugt zusätzlich, dass der Bremsvorgang aus Daten von Umgebungssensoren des eigenen Kraftfahrzeugs, umfassend auch die Kamera 2, abgeleitet wird. Ist eines der (insbesondere aktiven) Fahrzeugsysteme 5 ein Längsführungssystem, insbesondere ein ACC-System, ist dieses ohnehin in der Lage, vorausfahrende Kraftfahrzeuge 8 zu erfassen, beispielsweise unter Verwendung von Radarsensoren, und ihren Abstand sowie die Relativgeschwindigkeit zu vermessen, wobei eine (gegebenenfalls hinreichend starke) Veränderung der Relativgeschwindigkeit auf einen Bremsvorgang hindeutet, auf den das Längsführungssystem bei Aktivität ohnehin reagieren würde.

In einem Schritt S2 wird dann überprüft, ob die Bremsleuchten 9 des unmittelbar vorausfahrenden Kraftfahrzeugs 8 allesamt leuchten bzw. überhaupt detektierbar sind. Hierbei kann, wie bereits dargelegt wurde, eine Information über bei einem Bremsvorgang zu aktivierende Bremsleuchten 9 des unmittelbar voranfahrenden Kraftfahrzeugs 8, welche in der Kommunikationsinformation, dass ein Bremsvorgang vorliegt, enthalten sein kann, berücksichtigt werden. Wird nun festgestellt, beispielsweise in der Situation gemäß Fig. 3, dass wenigstens eine der Bremsleuchten 9 nicht leuchtet, obwohl ja ein Bremsvorgang des unmittelbar vorausfahrenden Kraftfahrzeugs 8 gegeben ist, wird in einem Schritt S3 durch die Kraftfahrzeug-zu-Kraftfahrzeug-Kommunikationseinrichtung 4 eine Kommunikationsinformation an das unmittelbar vorausfahrende Kraftfahrzeug 8 gesendet, die über den Defekt informiert.

In einem seitens des unmittelbar vorausfahrenden Kraftfahrzeugs 8 durchgeführten Schritt S4 wird eine Hinweisinformation an den Fahrer ausgegeben, dass vermutlich eine Bremsleuchte 9 defekt ist, zudem wird ein Eintrag in einen Fehlerspeicher durchgeführt.

Im Kraftfahrzeug 1 wird nach Beendigung des Schrittes S3 oder dann, wenn alle Bremsleuchten in Schritt S2 als aktiv detektiert wurden, mit einem Schritt S5 fortgefahren, in dem überwacht wird, ob die Helligkeit der Bremsleuchten 9 des unmittelbar vorausfahrenden Kraftfahrzeugs 8 einen Blendungsschwellwert überschreitet. Ist dies nicht der Fall, kann also nicht von einer Blendung des Fahrers des eigenen Kraftfahrzeugs 1 ausgegangen werden, wird zu Schritt S1 zurückgekehrt, um eine weitere Überwachung auf Bremsvorgänge und die Bremsleuchten 9 des unmittelbar vorausfahrenden Kraftfahrzeugs 8 vorzunehmen.

Wird jedoch eine vermutliche Blendung des Fahrers des eigenen Kraftfahrzeugs 1 festgestellt, wird im Schritt S6 überprüft, ob die Information über den Bremsvorgang des vorausfahrenden Kraftfahrzeugs 8 im eigenen Kraftfahrzeug 1 korrekt angekommen ist, insbesondere also, ob selbst ein Bremsvorgang seitens des Kraftfahrzeugs 1 vorliegt bzw. bei einer vollständig automatischen Längsführung des Kraftfahrzeugs 1 das entsprechende Längsführungssystem diese Information bei seinen Berechnungen wenigstens berücksichtigt hat. Bei manueller Längsführung kann ein derartiger Bremsvorgang beispielsweise durch Sensoren am Bremspedal des eigenen Kraftfahrzeugs 1 festgestellt werden, zweckmäßig ist es jedoch, zu überprüfen, ob denn das Signal vorliegt, das die eigenen Bremsleuchten 6 zum Leuchten bringt, was ja ebenso einen Bremsvorgang anzeigt. Von einem Längsführungssystem kann die Information, dass festgestellt wurde, dass das unmittelbar vorausfahrende Kraftfahrzeug bremst, ohnehin problemlos zur Verfügung gestellt werden. Diese in Schritt S6 entstehende Verlangsamungsinformation ist letztlich eine Art Quittierungsinformation, dass die durch das Leuchten der Bremsleuchten 9 des unmittelbar vorausfahrenden Kraftfahrzeugs 8 übermittelte Information auch empfangen wurde.

Liegt also eine dies beschreibende Verlangsamungsinformation vor, wird nicht wieder zu Schritt S1 zurückgekehrt, sondern mit einem Schritt S7 fortgefahren, in dem eine Kommunikationsinformation an das unmittelbar vorausfahrende Kraftfahrzeug 8 übermittelt wird, die von diesem bei manueller Längsführung des eigenen Kraftfahrzeugs 1 eine Reduzierung der Helligkeit der Bremsleuchten 9 fordert bzw. bei automatischer Längsführung seitens des eigenen Kraftfahrzeugs 1 in einigen Ausführungsbeispielen sogar eine gänzliche Deaktivierung der Bremsleuchten 9 anfordern kann, um eine Blendung des Fahrers möglichst zu vermeiden.

Im seitens des vorausfahrenden Kraftfahrzeugs 8 durchgeführten Schritt S8 werden dann entsprechend der Anforderung die Bremsleuchten 9 gedimmt oder gänzlich deaktiviert.

Wie bereits dargelegt wurde, wird das beschriebene Verfahren durch das Steuergerät 3 durchgeführt.

## Patentansprüche

1. Verfahren zum Betrieb eines Kraftfahrzeugs (1, 8) mit einem optischen, auf das Vorfeld des Kraftfahrzeugs (1, 8) gerichteten Sensor und einer Kraftfahrzeug-zu-Kraftfahrzeug-Kommunikationseinrichtung (4), wobei als optischer Sensor eine Kamera verwendet wird, **dadurch gekennzeichnet,**
**dass** aus den Bilddaten des optischen Sensors eine Helligkeit der Bremsleuchten (9) eines unmittelbar vorausfahrenden Kraftfahrzeugs (8) ermittelt und hinsichtlich einer über die Kommunikationseinrichtung (4) empfangenen und/oder auszusendenden Kommunikationsinformation ausgewertet wird, wobei bei einer einen Blendungsschwellwert überschreitenden Helligkeit und Vorliegen einer einen Verlangsamungsvorgang des eigenen Kraftfahrzeugs (1) anzeigenden Verlangsamungsinformation eine die Abdunklung und/oder Deaktivierung der Bremsleuchten (9) des unmittelbar vorausfahrenden Kraftfahrzeugs (8) anfordernde Kommunikationsinformation an das unmittelbar vorausfahrende Kraftfahrzeug (8) gesendet wird.

2. Verfahren nach Anspruch 1,
**dadurch gekennzeichnet,**
**dass** bei einem bezüglich der Längsführung automatisierten Betrieb des eigenen Kraftfahrzeugs (1) die Verlangsamungsinformation von einem den automatisierten Betrieb steuernden Fahrzeugsystem bereitgestellt wird und/oder bei einer manuellen Längsführung die Verlangsamungsinformation durch Auswertung von von einer Eigensensorik des Kraftfahrzeugs (1) gelieferten Sensordaten und/oder abhängig von einer Aktivierung der Bremsleuchten (6) des eigenen Kraftfahrzeugs (1) ermittelt wird.

3. Verfahren nach Anspruch 1 oder 2,
**dadurch gekennzeichnet,**
**dass** bei einer von dem unmittelbar vorausfahrenden Kraftfahrzeug (8) ausgehend empfangenen, einen aktuellen Bremsvorgang des unmittelbar vorausfahrenden Kraftfahrzeugs (8) anzeigenden Kommunikationsinformation und/oder einem durch Auswertung von Umgebungsdaten des eigenen Kraftfahrzeugs (1) festgestellten Bremsvorgang des unmittelbar vorausfahrenden Kraftfahrzeugs (8) und/oder bei Detektion einer aktivierten Bremsleuchte (9) nur auf einer Seite des unmittelbar vorausfahrenden Kraftfahrzeugs (8) aus den Bilddaten des optischen Sensors dann, wenn wenigstens eine Bremsleuchte (9) des unmittelbar vorausfahrenden Kraftfahrzeugs (8) anhand der Bilddaten des optischen Sensors nicht oder als nicht leuchtend detektiert wurde, eine diesem entsprechende, auf defekte Bremsleuchten (9) hinweisende Kommunikationsinformation an das unmittelbar vorausfahrende Kraftfahrzeug (8) gesendet wird.

4. Verfahren nach einem der vorangehenden Ansprüche,
**dadurch gekennzeichnet,**
**dass** die Helligkeit und/oder Detektierbarkeit unter Berücksichtigung einer Farbinformation für empfangenes Licht und/oder unter Annahme eines Modells für das unmittelbar vorausfahrende Kraftfahrzeug (8) und/oder unter Berücksichtigung von Nachverfolgungsdaten über das unmittelbar vorausfahrende Kraftfahrzeug (8) ermittelt wird.

5. Verfahren nach einem der vorangehenden Ansprüche,
**dadurch gekennzeichnet,**
**dass** ein WLAN-Standard zur Kommunikation verwendet wird.

6. Kraftfahrzeug (1, 18), aufweisend ein zur Durchführung eines Verfahrens nach einem der vorangehenden Ansprüche ausgebildetes Steuergerät (3).

## Claims

1. Method for operating a motor vehicle (1, 8) comprising an optical sensor which is aligned to the front of the motor vehicle (1, 8), and a motor vehicle-to-motor vehicle communication device (4), wherein a camera is used as optical sensor, **characterised in that**
a brightness of the brake lights (9) of a directly preceding vehicle (8) is determined from the image data of the optical sensor and is evaluated with respect to communication information which is to be received and/or emitted by means of the communication device (4), wherein in the case where the brightness exceeds a glare threshold and a piece of deceleration information is present indicating a deceleration procedure of one's own motor vehicle (1), a piece of communication information requesting the darkening and/or deactivating of the brake lights (9) of the directly preceding motor vehicle (8) is sent to the directly preceding motor vehicle (8).

2. Method according to claim 1,
**characterised in that**
in the case of an automatic operation of the longitudinal guidance of one's own motor vehicle (1), the piece of deceleration information is provided by a vehicle system controlling the automatic operation and/or, in the case of a manual longitudinal guidance, the piece of deceleration information is provided by evaluating sensor data delivered by an own sensor system of the motor vehicle (1) and/or is determined depending on an activation of the brake lights (6) of one's own motor vehicle (1).

3. Method according to claim 1 or 2,
**characterised in that**
in the case of communication information received from the immediately preceding motor vehicle (8), indicating a current braking procedure of the directly preceding motor vehicle (8) and/or in the case of a braking procedure of the immediately preceding vehicle (8) determined by evaluating environmental data of one's own motor vehicle (1) and/or in the case of detecting an activated brake light (9) only on one side of the directly preceding vehicle (8) from the image data of the optical sensor then, if at least one brake light (9) of the directly preceding motor vehicle (8) is not detected, or is detected to be not illuminated, by means of the image data of the optical sensor, then piece of communication information corresponding to this, indicating defective brake lights (9) is sent to the immediately preceding motor vehicle (8).

4. Method according to any of the preceding claims,
**characterised in that**
the brightness and/or detectability is determined taking into account colour information for received light and/or on assuming a model for the immediately preceding motor vehicle (8) and/or taking into account tracking data concerning the immediately preceding motor vehicle (8).

5. Method according to any of the preceding claims,
**characterised in that**
a WLAN standard is used for communication.

6. Motor vehicle (1, 18), comprising a control device (3) designed for carrying out a method according to any of the preceding claims.

## Revendications

1. Procédé de fonctionnement d'un véhicule automobile (1, 8) avec un capteur optique, dirigé sur l'aire avant du véhicule automobile (1, 8) et un dispositif de communication (4) véhicule automobile-véhicule automobile, dans lequel une caméra est utilisée en tant que capteur optique, **caractérisé en ce**
**qu'**une luminosité des feux stop (9) d'un véhicule automobile circulant directement devant (8) est déterminée à partir des données d'image du capteur optique et évaluée en ce qui concerne une information de communication reçue et/ou à émettre par le biais du dispositif de communication (4), dans lequel dans le cas d'une luminosité dépassant une valeur seuil d'éblouissement et en présence d'une information de ralentissement affichant une opération de ralentissement du propre véhicule automobile (1), une information de communication demandant l'obscurcissement et/ou la désactivation des feux stop (9) du véhicule automobile circulant directement devant (8) est envoyée au véhicule automobile circulant directement devant (8).

2. Procédé selon la revendication 1,
**caractérisé en ce**
**que** dans le cas d'un fonctionnement automatisé en ce qui concerne le guidage longitudinal du propre véhicule automobile (1), l'information de ralentissement est mise à disposition par un système de véhicule commandant le fonctionnement automatisé et/ou dans le cas d'un guidage longitudinal manuel, l'information de ralentissement est déterminée par l'évaluation de données de capteur fournies par un propre système de capteurs du véhicule automobile (1) et/ou en fonction d'une activation des feux stop (6) du propre véhicule automobile (1).

3. Procédé selon la revendication 1 ou 2,
**caractérisé en ce**
**que** dans le cas d'une information de communication reçue à partir du véhicule automobile circulant directement devant (8), affichant une opération de freinage actuelle du véhicule automobile circulant directement devant (8) et/ou d'une opération de freinage du véhicule automobile circulant directement devant (8) constatée par l'évaluation de données environnementales du propre véhicule automobile (1) et/ou en cas de détection d'un feu stop (9) activé seulement d'un côté du véhicule automobile circulant directement devant (8) à partir des données d'image du capteur optique alors, lorsqu'au moins un feu stop (9) du véhicule automobile circulant directement devant (8) n'a pas été détecté ou a été détecté comme non allumé à l'aide des données d'image du capteur optique, une information de communication correspondant à cela, indiquant des feux stop (9) défectueux est envoyée au véhicule automobile circulant directement devant (8).

4. Procédé selon l'une quelconque des revendications précédentes,
**caractérisé en ce**
**que** la luminosité et/ou la détectabilité est déterminée en tenant compte d'une information de couleur pour la lumière reçue et/ou en supposant un modèle pour le véhicule automobile circulant directement devant (8) et/ou tenant compte de données de suivi par le biais du véhicule automobile circulant directement devant (8).

5. Procédé selon l'une quelconque des revendications précédentes,
**caractérisé en ce**
**qu'**un standard Wi-Fi est utilisé pour la communication.

6. Véhicule automobile (1, 18) présentant un appareil de commande (3) réalisé pour la réalisation d'un procédé selon l'une quelconque des revendications précédentes.
